# FASCICULE DE BREVET EUROPEEN

(11) **EP 1 672 194 B1**
(45) Date de publication et mention de la délivrance du brevet: **10.03.2010**
(21) Numéro de dépôt: 05292666.4
(22) Date de dépôt: 09.12.2005
(51) Int. Cl.: F01N 9/00, F01N 3/032

(54) **Procédé de régénération d'un filtre à particules avec dispositif à combustion catalytique et installation de filtration utilisant un tel procédé**
Verfahren zur Regeneration eines Partikelfilters mit einer katalytischen Verbrennungseinheit und das Verfahren verwendende Filtervorrichtung
Method of regeneration of a particulate filter with an catalytic combustion apparatus and filter installation using the method

(30) Priorité: 20.12.2004 FR 0413622
(43) Date de publication de la demande: 21.06.2006
(73) Titulaire: Institut Français du Pétrole, 92852 Rueil Malmaison Cedex (FR); Airmeex S.A., 92170 Vigneux sur Seine (FR)
(72) Inventeur: Lavy, Jacques, 38200 Serpaize (FR); Dementhon, Jean-Baptiste, 75011 Paris (FR); Biancotto, Daniel, 94410 Saint Maurice (FR); Erol, Turkay, 94210 La Varene Saint Hilaire (FR)

(56) Documents cités:
- EP-A- 1 149 232
- EP-A- 1 300 554
- EP-A- 1 344 908
- EP-A- 1 348 838
- EP-A- 1 479 883
- FR-A- 2 753 393
- FR-A- 2 855 218
- GB-A- 2 114 913
- US-A- 4 459 805
- US-A- 4 485 621
- US-A- 5 826 428
- US-A1- 2002 178 922
- US-A1- 2003 140 622
- US-B1- 6 233 926
- PATENT ABSTRACTS OF JAPAN vol. 008, no. 216 (M-329), 3 octobre 1984 (1984-10-03) & JP 59 101522 A (YANMAR DIESEL KK), 12 juin 1984 (1984-06-12)

## Description

La présente invention se rapporte à un procédé de régénération de filtre à particules, notamment de particules présentes dans les gaz d'échappement de moteur à combustion interne, et à une installation utilisant un tel procédé.

Elle vise notamment le domaine de la gestion de l'encrassement d'un filtre placé dans la ligne d'échappement d'un moteur à combustion interne, notamment de type Diesel, et traversé par des gaz d'échappement transportant des particules, telles que des particules carbonées ou des suies.

De tels moteurs génèrent des quantités de particules particulièrement élevées et leurs lignes d'échappement sont de plus en plus souvent équipées de filtres qui retiennent ces particules avec des efficacités de filtration très importantes, voisine de 100%.

Cependant de tels filtres doivent être périodiquement régénérés afin d'éviter leur colmatage par encrassement. En effet, le colmatage entraîne une augmentation de la contre-pression à l'échappement, ce qui a pour effet d'accroître la consommation en carburant du moteur. Dans le cas extrême d'un colmatage total de ce filtre, cela peut entraîner un grave dysfonctionnement du moteur, voire un arrêt complet du fonctionnement de ce moteur, et/ou la destruction du filtre.

La régénération d'un filtre à particules se produit parfois naturellement, lorsque la température des gaz d'échappement a atteint le niveau nécessaire pour brûler les particules présentes sur ce filtre.

Toutefois, dans certaines conditions de fonctionnement du moteur, la température des gaz d'échappement n'est pas suffisante pour assurer la régénération du filtre et il est alors nécessaire de déclencher artificiellement la combustion des particules lorsque l'encrassement du filtre a atteint un certain seuil.

Cela peut consister à augmenter la température du filtre au-dessus de 550° C, généralement en augmentant temporairement la richesse des gaz d'échappement qui le traversent sans qu'elle n'atteigne la richesse 1, et à obtenir une composition oxydante de ces mêmes gaz pour réaliser la combustion des particules retenues dans ce filtre.

Ceci a pour inconvénient majeur d'augmenter la consommation de carburant.

Une autre technique consiste, comme mieux décrit dans le brevet européen EP 0 341 832, à disposer un catalyseur d'oxydation du monoxyde d'azote (NO) en amont du filtre. Ce catalyseur oxyde le monoxyde d'azote contenu dans les gaz d'échappement en dioxyde d'azote (NO₂) et ce dioxyde d'azote est ensuite utilisé pour permettre la combustion des particules piégées sur le filtre à une température comprise entre 280° C et 400° C.

Cette technique nécessite d'utiliser un carburant Diesel en teneur en soufre très bas (de l'ordre de 50 ppm) pour pouvoir maintenir une efficacité de conversion suffisante du catalyseur d'oxydation visant à obtenir une grande quantité de NO transformée en NO₂.

D'autres techniques font appel à un procédé chimique pour lequel des additifs organométalliques, tel que le cérium par exemple, sont ajoutés au carburant Diesel de manière à obtenir une combustion des particules présentes sur le filtre à une température voisine de 400° C à 450° C.

L'utilisation de tels additifs est d'un coût non négligeable et nécessite un dispositif particulier d'introduction de ces additifs, notamment dans le réservoir de carburant Diesel.

Il est également connu de chauffer ces gaz d'échappement par des dispositifs rapportés placés dans la ligne d'échappement et en amont du filtre comme des brûleurs ou comme des résistances électriques telles que mieux décrites dans les brevets FR 2 753 393 et FR 2 755 623 du demandeur.

Dans cette configuration, il est nécessaire d'apporter une grande quantité d'énergie calorifique aux gaz d'échappement soit en brûlant une quantité importante de carburant, dans le cas d'une utilisation de brûleur, soit en utilisant une forte puissance électrique pour les résistances électriques.
Ceci a pour inconvénient majeur d'augmenter, de façon non négligeable, la consommation en carburant du moteur et de nuire au confort de conduite.

Il est également connu par le document JP 59101522 de prévoir un dispositif à combustion catalytique en amont de filtres à particules pour générer des gaz chauds nécessaires à la régénération de ces filtres. Ce dispositif comprend une conduite portant un élément catalytique ainsi qu'un injecteur de carburant permettant de réaliser une combustion catalytique du mélange carburé. L'ensemble comprend également un dispositif de préchauffage d'un air extérieur qui comprend un carter à double paroi entourant la sortie de l'ensemble de filtres et qui est raccordé à la conduite. Ainsi, l'air extérieur est introduit dans ce carter, se réchauffe en captant par échange les calories des gaz d'échappement, et est dirigé à l'état réchauffé vers la conduite. Cet air chaud arrive ainsi en amont de l'élément catalytique en favorisant la vaporisation du carburant injecté et son mélange avec ce carburant.

Cet ensemble présente néanmoins l'inconvénient d'obtenir un air chaud dont la température ne pourra pas être réglé car celle-ci sera tributaire de la température des gaz d'échappement sortant des filtres. En outre, le niveau de température de cet air réchauffé est insuffisant pour rendre opérationnel l'élément catalytique (température de démarrage ou de light off) ce qui va introduire des hydrocarbures imbrûlés à l'entré des filtres.

Il est également connu par les documents GB 2114913 et EP 1348838 d'élever, notamment par un chauffage électrique, la température du fluide à mélanger avec le carburant de façon à obtenir rapidement une température de "light off de l'élément catalytique du dispositif à combustion catalytique..

Ceci a pour inconvénient d'être une solution qui est fortement consommatrice de puissance électrique.

La présente invention se propose de remédier aux inconvénients mentionnés ci-dessus grâce à un procédé et à un dispositif qui permette d'atteindre des températures de régénération très rapidement et en minimisant la consommation.

A cet effet, la présente invention concerne un procédé de régénération d'un filtre à particules placé dans la ligne d'échappement d'un moteur à combustion interne, notamment de type Diesel, procédé dans lequel on évalue l'état de colmatage du filtre, on compare cet état à une valeur-seuil puis, en cas de dépassement de cette valeur-seuil, on élève, au préalable de la réalisation d'un mélange d'un fluide et d'un carburant, la température du fluide jusqu'à la température d'amorçage d'un élément catalytique utilisé pour une combustion catalytique, on injecte un carburant pour réaliser ledit mélange, on réalise, une fois que le fluide a atteint ladite température, une combustion catalytique de ce mélange en amont dudit filtre pour générer des gaz chauds nécessaires à la régénération du filtre et on procède à la régénération du filtre par ces gaz chauds traversant ledit filtre et ayant une température suffisante pour assurer la combustion des particules retenues dans ce filtre, caractérisé en ce qu'on fait circuler les gaz d'échappement autour de l'élément catalytique utilisé pour la combustion catalytique afin d'élever la température dudit élément.

On peut utiliser, comme fluide, de l'air et/ou les gaz d'échappement du moteur.

On peut ajouter un additif au carburant pour abaisser la température de combustion des particules.

L'invention concerne également une installation de filtration de gaz d'échappement d'un moteur à combustion interne, notamment de type Diesel, avec un ensemble de filtration comprenant au moins une zone de filtration comportant une cartouche de filtration traversée par les gaz d'échappement du moteur, un dispositif à combustion catalytique disposé en amont dudit ensemble de filtration et permettant de générer des gaz chauds nécessaires à la régénération d'au moins une desdites cartouches, ledit dispositif comprenant une conduite raccordée à l'amont de l'ensemble de filtration et portant un élément catalytique ainsi qu'un dispositif d'injection de carburant, et une résistance électrique pour élever la température du fluide jusqu'à la température d'amorçage dudit élément catalytique, caractérisée en ce qu'elle comprend une conduite de chauffage autour de l'élément catalytique de manière à ce que les gaz d'échappement entourent en la balayant la partie d'une conduite (30) dans laquelle se trouve l'élément catalytique (36) afin d'élever la température dudit élément.

Le dispositif à combustion catalytique peut comprendre un moyen de pompage du fluide prévu pour traverser l'élément catalytique.

L'installation de filtration peut comprendre un compartiment de répartition placé en amont de la cartouche et portant une arrivée de gaz d'échappement du moteur et une admission de gaz chauds provenant du dispositif à combustion catalytique.

Le compartiment de répartition peut comprendre un moyen d'obturation par vanne pour contrôler l'arrivée des gaz d'échappement du moteur et l'admission des gaz chauds.

L'installation de filtration peut comprendre une conduite de chauffage de l'élément catalytique.

L'élément catalytique peut comprendre un élément catalyseur pour la combustion catalytique et un élément catalytique d'oxydation des gaz d'échappement.

L'élément catalytique peut être imprégné d'une formulation catalytique permettant de réduire les oxydes d'azote des gaz d'échappement.

Les autres caractéristiques et avantages de l'invention vont apparaître à la lecture de la description qui va suivre, donnée à titre uniquement illustratif et non limitatif, et à laquelle sont annexées :
- la figure 1 qui est un schéma montrant l'installation de régénération de filtre à particules selon l'invention ;
- la figure 2 qui illustre un exemple de réalisation de l'ensemble de filtration de l'installation de la figure 1 ;
- la figure 3 qui est une vue en coupe latérale selon la ligne 3-3 de la figure 2 n'étant pas l'objet de l'invention;
- la figure 4 qui est une vue semblable à la figure 3 et montrant en mode régénération n'étant pas l'objet de l'invention;
- la figure 5 qui illustre une variante de l'élément de l'installation de la figure 4 n'étant pas l'objet de l'invention;
- la figure 6 qui montre une vue en coupe latérale de l'exemple de réalisation de la figure 2 et
- la figure 7 qui présente une vue en coupe latérale d'une variante de l'exemple de réalisation de la figure 2.

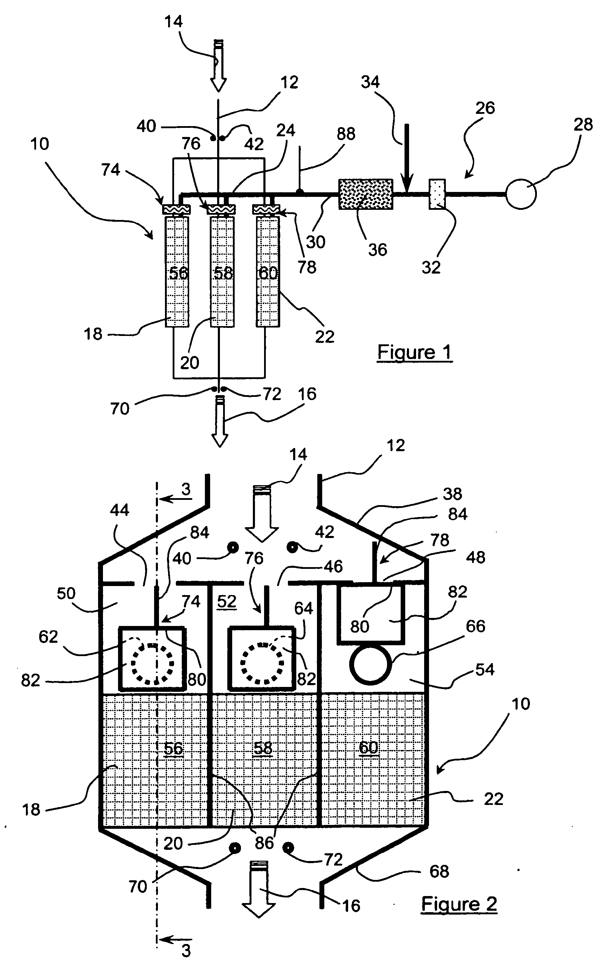

Sur la figure 1, l'installation comprend un ensemble de filtration 10, notamment un filtre à particules, placé sur une ligne d'échappement 12 d'un moteur à combustion interne, plus particulièrement d'un moteur de type Diesel.

Cet ensemble est traversé par les gaz d'échappement dont le trajet est symbolisé par les flèches 14 (entrée de gaz) et 16 (sortie de gaz) de la figure 1 et est divisé en au moins deux zones de filtration, ici trois zones 18, 20, 22 de préférence sensiblement égales. L'installation comprend également un dispositif à combustion catalytique 26 qui permet de générer des gaz chauds qui sont envoyés par une conduite 24 à cet ensemble de filtration.

Ce dispositif à combustion catalytique, comprend une pompe d'alimentation en air extérieur 28, et dans le sens de circulation de cet air le long d'une conduite 30 raccordée à la conduite de raccordement 24, un dispositif de préchauffage 32 de l'air circulant dans la conduite 30, un dispositif d'injection de carburant 34 dans la conduite et un élément catalytique 36, dénommé dans la suite de la description catalyseur.

Le dispositif de préchauffage est préférentiellement une résistance électrique placée au sein de la conduite, entre la pompe et le dispositif d'injection de carburant 34, alimentée en courant électrique par une batterie ou par une supercapacité, et balayée par l'air qui y circule sous l'effet de la pompe. Le dispositif d'injection de carburant peut être un injecteur-pompe connecté au circuit de carburant que comprend habituellement ce moteur. Le catalyseur est du type catalyseur d'oxydation du carburant contenu dans le mélange carburé qui le traverse et permet de chauffer très rapidement l'air contenu dans ce mélange qui le traverse et de distribuer ainsi des gaz chauds à la conduite 24. Ce catalyseur peut être sous la forme d'un monolithe constitué d'un feuillard métallique ondulé enroulé sur lui-même en formant un ensemble cylindrique appelé "nid d'abeille". La taille de cet ensemble cylindrique est fonction du volume des gaz d'échappement qui le traverse et cela afin de limiter la contre-pression. Ce catalyseur peut également être constitué d'un monolithe en cordiérite voire d'un élément filtrant, en carbure de silicium par exemple, imprégné d'une formulation catalytique d'oxydation.

En se rapportant à la figure 2, l'ensemble de filtration 10 comprend un collecteur d'arrivée de gaz d'échappement 38 raccordé à la ligne d'échappement 12 et dans lequel sont introduits les gaz d'échappement. Dans ce collecteur sont placés plusieurs capteurs et plus précisément un capteur de pression 40 (capteur de pression amont) et un capteur de température 42 (capteur de température amont). Ce collecteur débouche par des entrées 44, 46, 48 dans les zones de filtration 18, 20, 22 qui comprennent chacune, en aval de ces entrées, un compartiment de répartition 50, 52, 54 prévu en amont d'une cartouche filtrante 56, 58, 60 et dans lequel aboutit, par des dérivations de la conduite 24, une admission 62, 64, 66 de gaz chauds. Les sorties des cartouches aboutissent à un collecteur de sortie 68 raccordé à la ligne d'échappement 12 et qui comprend également plusieurs capteurs, comme un capteur de pression 70 (capteur de pression aval) et un capteur de température 72 (capteur de température aval).

Chaque compartiment de répartition comprend un moyen de d'obturation par vanne 74, 76, 78 permettant de contrôler l'entrée de gaz d'échappement et/ou l'admission 62, 64, 66 de gaz chauds.

Les moyens d'obturation par vanne ou vannes sont commandés par un ou plusieurs actionneurs (non représentés) et ce de façon indépendante les uns des autres mais en n'obturant jamais de manière simultanée toutes les entrées 44, 46, 48 des compartiments 50, 52, 54.

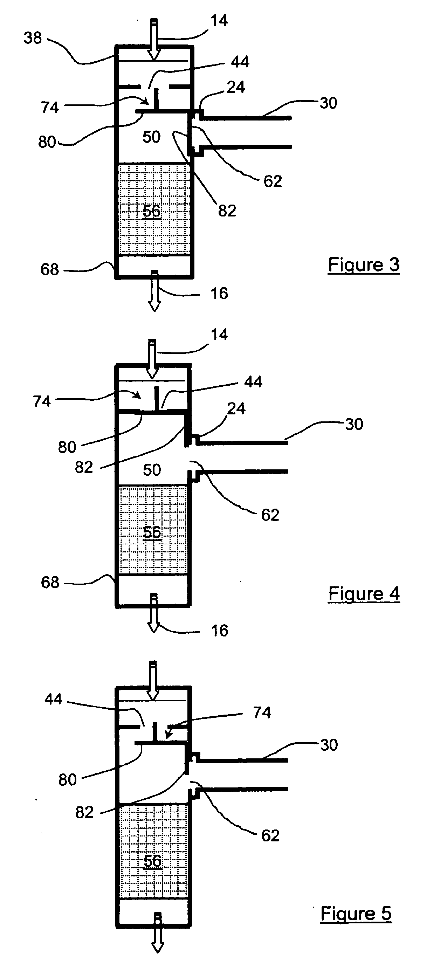

A titre d'exemple et comme mieux illustré sur les figures 3 à 7, les vannes comprennent chacune deux moyens d'obturation liés l'un à l'autre, un premier moyen, dit plateau 80, apte à ouvrir ou fermer l'arrivée de gaz d'échappement et un deuxième moyen, dit coulisse 82, permettant d'ouvrir et de fermer l'admission de gaz chauds. Le plateau et la coulisse sont disposés d'une manière telle que l'arrivée de gaz d'échappement et l'admission de gaz chauds d'un même compartiment ne peuvent pas être fermées simultanément. De préférence, l'arrivée et l'admission sont disposées orthogonalement l'une avec l'autre et de ce fait, le plateau et la coulisse sont également disposés orthogonalement. Ces moyens d'obturation sont commandés en déplacement par une tige 84 soumise à un déplacement en translation sous l'action de tout moyen connu, comme un vérin, un électroaimant,...

En outre, des cloisons 86 sont prévues pour isoler les zones 18, 20, 22 entre elles et délimiter les compartiments 50, 52, 54 les uns des autres.

Dans le cas de la présente description, les termes « amont » et « aval » s'entendent, pour l'ensemble de filtration, comme la circulation des gaz d'échappement du collecteur d'arrivée 38 vers le collecteur de sortie 68 alors que, dans le cas du dispositif à combustion catalytique, la circulation de l'air est considérée de la pompe 28 vers les admissions 62, 64, 66.

En fonctionnement, une unité de contrôle (non représentée), tel qu'un calculateur-moteur que comporte habituellement le moteur, détermine la position des vannes 74, 76, 78 en fonction des différents paramètres de fonctionnement du moteur.

Comme illustré à la figure 2 à titre d'exemple, il peut être prévu que, pour des charges moyennes du moteur ou pour des débits moyens de gaz d'échappement (de l'ordre de 200 à 400m³/h), les vannes 74 et 76 soient commandées par l'unité de contrôle de telle manière qu'elles ouvrent l'entrée des gaz d'échappement 44 et 46 en fermant les admissions 62 et 64 par les coulisses 82 alors que la vanne 78 obture l'entrée 48 de gaz d'échappement par le plateau 80. Ceci permet avantageusement d'adapter le volume de filtration au volume des gaz qui traverse l'ensemble de filtration.

A titre d'exemple, il est considéré que l'installation, comme montré aux figures 2 et 3, est en état de chargement, c'est-à-dire que les cartouches 56, 58 et 60 ne sont pas saturées par les particules ou suies contenues dans les gaz d'échappement. Dans ce cas, la totalité des gaz d'échappement passe, au travers des entrées 44 et 46, du collecteur 38 vers les compartiments 50, 52, puis traversent les cartouches 56 et 58 de manière à ce que les particules contenues dans ces gaz soient, en très grande partie, retenues par ces cartouches et enfin aboutissent dans le collecteur de sortie 68 pour être rejetés par la ligne d'échappement 12. Dans cette configuration, la résistance 32 n'est pas alimenté en carburant, aucun carburant n'est introduit dans la conduite 30 par l'injecteur 34 et le catalyseur 36 est à température ambiante.

Périodiquement, généralement tous les 200 km ou toutes les deux heures de fonctionnement, période qui peut être modifiée en fonction des conditions d'utilisation, il est réalisé une estimation du niveau de colmatage de l'ensemble de filtration. Plus particulièrement, il va être examiné l'état de colmatage par les particules de chaque cartouche 56, 58, 60.

Pour ce faire et en partant de la configuration de la figure 2, l'unité de contrôle commande les vannes de façon à ce qu'une seule entrée de gaz d'échappement soit ouverte. Ainsi à partir de l'exemple montré à la figure 2, la vanne 76 sera actionnée pour obturer l'entrée 46 de gaz d'échappement et seule l'entrée 44 sera ouverte. Les gaz d'échappement traversent donc, dans leur totalité, cette entrée 44 puis circulent dans la cartouche 56 et ressortent dans la ligne 12 par le collecteur de sortie 68. Grâce aux capteur de pression amont 40 et aval 70, une perte de charge est calculée par l'unité de contrôle puis comparée à une table de valeurs contenue dans cette unité. Si la valeur de cette perte de charge est inférieure à une valeur-seuil de cette table, l'unité commande les vannes de façon à répéter cet examen du niveau de colmatage sur la cartouche suivante 58 en ouvrant l'entrée 46 et en fermant l'entrée 44. De même, si la perte de charge de la cartouche 58 est inférieure à la valeur-seuil, l'opération se poursuivra sur la cartouche 60.

Si la valeur-seuil de la perte de charge de l'une des cartouches est atteinte, par exemple la cartouche 56 comme illustré sur la figure 4, alors la vanne 74 ferme l'entrée 44 de gaz d'échappement par le plateau 80 et libère l'admission 62 de gaz chauds pour procéder à la régénération de cette cartouche. Bien entendu, l'unité de contrôle fera en sorte d'adapter au mieux le volume des gaz d'échappement à traiter par les autres cartouches en commandant les vannes qui y sont associées de façon à ce qu'au moins une des arrivées 46 et 48 soient ouvertes.

Simultanément à la fermeture de l'arrivée 44, l'unité commande la mise en marche de la pompe 28 qui fait circuler de l'air dans la conduite 30 et envoie un courant électrique au travers de la résistance électrique 32. Ce faisant, cette résistance chauffe l'air dans cette conduite pour qu'il atteigne une température voisine de 250°C, température d'amorçage du catalyseur dite température de démarrage ou de light off. Cette température de l'air est constamment surveillée par un capteur de température 88 prévu dans la conduite 30 en aval du catalyseur 36. Dès que cette température est atteinte, une introduction de carburant dans la conduite 30 et en amont du catalyseur 36 est réalisée par l'injecteur 34. Par réaction catalytique, le mélange air/carburant traversant ce catalyseur se consume et les gaz chauds sortant de ce catalyseur atteignent une température supérieure à 550°C, température nécessaire et suffisante pour assurer la combustion des particules présentes dans la cartouche à régénérer. Ces gaz chauds pénètrent ensuite dans le compartiment 50 par l'admission 62, traversent la cartouche 56 pour y brûler les particules retenues dans celle-ci et ressortent par le collecteur 68 pour être évacués dans la ligne d'échappement 12.

La vitesse de régénération de la cartouche sera contrôlée par l'unité de contrôle qui pilotera non seulement la quantité de carburant introduite dans la conduite 30 mais aussi le débit d'air qui y circule grâce à la pompe 28. De même, cette unité interrompra si nécessaire l'alimentation de la résistance 32.

Une fois que la régénération de la cartouche 56 est terminée, l'unité de contrôle actionne les vannes de façon à ce que l'installation de régénération se retrouve dans la configuration ayant précédé cette régénération et comme illustré à la figure 2. Si cela s'avère nécessaire, l'unité de contrôle commandera les vannes d'une manière semblable à celle décrite ci-dessus pour procéder à la régénération d'une autre cartouche.

Avantageusement, il peut être prévu de mélanger un additif au carburant avant son injection dans la conduite 30 par l'injecteur 34 et ce afin de baisser la température de réaction du catalyseur.

Préférentiellement et comme visible sur la figure 5, pendant la régénération de la cartouche 56 et en fonction des températures amont et aval relevés par les capteurs 42 et 72 et communiquées à l'unité de contrôle, il peut être prévu que cette unité de contrôle commande la vanne 74 pour ouvrir temporairement l'admission 44 en faisant quitter le plateau 80 de son siège tout en laissant l'admission 62 ouverte. Ceci a pour effet d'introduire des gaz d'échappement au travers de cette cartouche et d'éviter ainsi un échange de chaleur trop important pour cette cartouche lors de sa régénération.

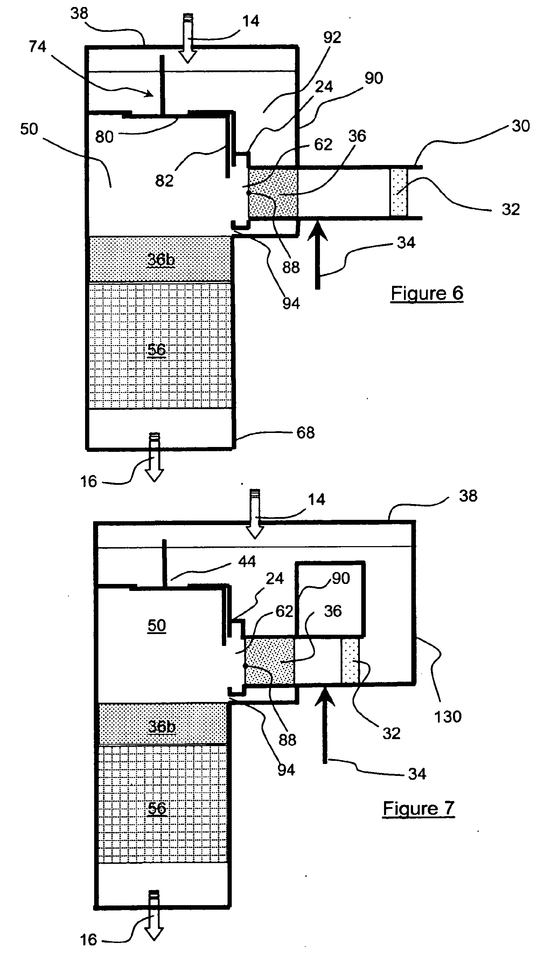

L'exemple montré à la figure 6 est une vue en coupe latérale de la figure 2 et pour cela comporte les mêmes références pour les parties communes aux deux figures.

Dans cette vue, le dispositif à combustion catalytique 26 comporte les mêmes éléments que ceux décrits en relation avec la figure 1 (pompe, résistance chauffante, injecteur de carburant et catalyseur). Dans cet exemple le catalyseur 36 est placé au plus près des cartouches de manière à ce que le cheminement des gaz chauds entre ce catalyseur et les cartouches soit minimisé et ainsi à limiter les pertes thermiques de ces gaz.

Le catalyseur est baigné par les gaz d'échappement afin que ces derniers transmettent une partie de leur énergie calorifique à ce catalyseur et ainsi minimise la puissance électrique d'alimentation de la résistance tout en diminuant le temps nécessaire pour que le catalyseur atteigne sa température de light off. Plus précisément, à partir du collecteur d'arrivée 38 part une conduite 90 dont l'embouchure 92 prend naissance à ce collecteur et dont le débouché 94 de cette conduite arrive dans un des compartiments, ici dans le compartiment 50 et en amont de la cartouche 56. Cette conduite de chauffage 90 est traversée sensiblement orthogonalement par la conduite 30 et a une dimension transversale telle que la dimension transversale de la conduite 30 y soit comprise. Le catalyseur est placé dans la région de la conduite 30 qui croise la conduite de chauffage 90 de manière à ce que les gaz d'échappement venant du collecteur 38 entourent en la balayant la partie de la conduite 30 dans laquelle se trouve le catalyseur 36 et transmettent leurs calories à ce catalyseur.

Préférentiellement, le débouché 94 de la conduite 90 n'est pas obturé par la coulisse 82 de la vanne 74 de façon à ce que les gaz d'échappement circulent en permanence du collecteur d'arrivée vers le compartiment en baignant constamment la section de la conduite qui porte le catalyseur.

Avantageusement, de façon à limiter l'inertie thermique de ce catalyseur, il peut être prévu de le séparer en plusieurs éléments, un premier élément en lieu et place du catalyseur 36 pour assurer la combustion catalytique du mélange carburé circulant dans la conduite 30 et un deuxième élément catalytique 36b placé en amont de la cartouche 56 et en aval de l'admission de gaz chauds 62 et dont le rôle sera d'oxyder les hydrocarbures imbrûlés (HC) et les oxydes de carbones (CO) présent dans les gaz d'échappement et/ou dans les gaz chauds résultant de la combustion catalytique.

Le fonctionnement de l'ensemble de filtration comportant les éléments décrits en relation avec la figure 6 sera identique à celui décrit en relation avec les figures 1 à 5 avec l'avantage supplémentaire que le catalyseur 36 sera à une température sensiblement voisine de celle des gaz d'échappement. Ceci permet de rendre opérationnel plus rapidement le catalyseur 36 grâce à la conduite de chauffage 90 et de limiter la puissance électrique à envoyer à la résistance pour chauffer l'air circulant dans la conduite 30.

La réalisation illustrée à la figure 7 est une variante de la figure 6 et pour cela comporte les mêmes références que cette figure.

Cette variante se distingue de la figure 6 dans le sens que le dispositif à combustion catalytique est dépourvu de pompe de circulation de l'air.

Dans ce cas, la conduite 130 portant la résistance 32, l'injecteur 34 et le catalyseur 36 débute au niveau du collecteur d'arrivée 38 et aboutit à l'admission de gaz chauds 62 comme précédemment décrite en relation avec les figures 1 à 5.

Ainsi, pendant le fonctionnement des opérations de régénération des cartouches, la résistance 32 est alimentée (dans le cas où la température des gaz d'échappement n'est pas suffisante pour porter le catalyseur 36 à sa température de démarrage ou de light off) et chauffe les gaz d'échappement qui la parcourent. Dès que cette température est atteinte grâce à la mesure effectuée par le capteur 88, l'injecteur de carburant introduit du carburant dans la conduite 130, en aval de la résistance et en amont du catalyseur, et interrompt l'alimentation de la résistance, si nécessaire. Les gaz d'échappement circulant dans cette conduite contiennent suffisamment d'oxygène pour que le mélange carburé qui traverse le catalyseur 36 soit oxydé et procure en sortie de catalyseur des gaz chauds qui seront ensuite introduits par l'admission 62 dans le compartiment 50 puis traverseront la cartouche 56.

Il peut être envisagé que soit le catalyseur 36 soit les cartouches 56, 58, 60 soient imprégnés d'une formulation catalytique permettant de réduire les NOx présents dans les gaz chauds ou dans les gaz d'échappement.

## Revendications

1. Procédé de régénération d'un filtre à particules (10) placé dans la ligne d'échappement (12) d'un moteur à combustion interne, notamment de type Diesel, procédé dans lequel on évalue l'état de colmatage du filtre, on compare cet état à une valeur-seuil puis, en cas de dépassement de cette valeur-seuil, on élève, au préalable de la réalisation d'un mélange d'un fluide et d'un carburant, la température du fluide jusqu'à la température d'amorçage d'un élément catalytique (36) utilisé pour une combustion catalytique, on injecte un carburant pour réaliser ledit mélange, on réalise, une fois que le fluide a atteint ladite température, une combustion catalytique de ce mélange en amont dudit filtre pour générer des gaz chauds nécessaires à la régénération du filtre et on procède à la régénération du filtre par ces gaz chauds traversant ledit filtre et ayant une température suffisante pour assurer la combustion des particules retenues dans ce filtre, **caractérisé en ce qu'**on fait circuler les gaz d'échappement autour de l'élément catalytique (36) utilisé pour la combustion catalytique afin d'élever la température dudit élément.

2. Procédé de régénération selon la revendication 1, **caractérisé en ce qu'**on utilise, comme fluide, de l'air.

3. Procédé de régénération selon la revendication 1 , **caractérisé en ce qu'**on utilise, comme fluide, les gaz d'échappement du moteur.

4. Procédé de régénération selon l'une des revendications précédentes, **caractérisé en ce qu'**on ajoute un additif au carburant pour abaisser la température de combustion des particules.

5. Installation de filtration de gaz d'échappement d'un moteur à combustion interne, notamment de type Diesel, avec un ensemble de filtration (10) comprenant au moins une zone de filtration (18, 20, 22) comportant une cartouche de filtration (56, 58, 60) traversée par les gaz d'échappement du moteur, un dispositif à combustion catalytique (26) disposé en amont dudit ensemble de filtration et permettant de générer des gaz chauds nécessaires à la régénération d'au moins une desdites cartouches (56, 58, 60), ledit dispositif comprenant une conduite raccordée à l'amont de l'ensemble de filtration (10) et portant un élément catalytique (36) ainsi qu'un dispositif d'injection de carburant (34), et une résistance électrique (32) pour élever la température du fluide jusqu'à la température d'amorçage dudit élément catalytique, **caractérisée en ce qu'**elle comprend une conduite de chauffage (90) autour de l'élément catalytique (36) de manière à ce que les gaz d'échappement entourent en la balayant la partie d'une conduite (30) dans laquelle se trouve l'élément catalytique (36) afin d'élever la température dudit élément.

6. Installation de filtration selon la revendication 5, **caractérisée en ce que** le dispositif à combustion catalytique comprend un moyen de pompage (28) du fluide prévu pour traverser l'élément catalytique (36).

7. Installation de filtration selon l'une des revendications 5 ou 6, **caractérisée en ce qu'**elle comprend un compartiment de répartition (50, 52, 54) placé en amont de la cartouche (56, 58, 60) et portant une arrivée (44, 46, 48) de gaz d'échappement du moteur et une admission (62, 64, 66) de gaz chauds provenant du dispositif à combustion catalytique (26).

8. Installation de filtration selon la revendication 7, **caractérisée en ce que** le compartiment de répartition (50, 52, 54) comprend un moyen d'obturation par vanne (74, 76, 78) pour contrôler l'arrivée des gaz d'échappement du moteur et l'admission des gaz chauds.

9. Installation de filtration selon l'une des revendications 5 à 8, **caractérisée en ce que** l'élément catalytique comprend un élément catalyseur (36) pour la combustion catalytique et un élément catalytique d'oxydation (36b) des gaz d'échappement.

10. Installation de filtration selon l'une des revendications 5 à 9, **caractérisée en ce que** l'élément catalytique (36) est imprégné d'une formulation catalytique permettant de réduire les oxydes d'azote (NOx) des gaz d'échappement.

## Claims

1. A method of regenerating a particulate filter (10) placed in the exhaust line (12) of an internal combustion engine, notably of the Diesel type, in which method the filter clogging state is assessed, this state is compared with a threshold value, then, if this threshold value is exceeded, the temperature of the fluid is raised, prior to realising a mixture of a fluid and a fuel, up to the priming temperature of a catalytic element (36) used for a catalytic combustion, a fuel is injected to realise said mixture, there is realised, once the fluid has reached said temperature, a catalytic combustion of this mixture upstream of said filter to generate the hot gases that are necessary for the regeneration of the filter and the regeneration of the filter is executed by those hot gases which flow through said filter and which have a temperature that is sufficient to ensure the combustion of the particles retained in this filter, **characterised in that** the exhaust gases are made to circulate around the catalytic element (36) used for the catalytic combustion in order to increase the temperature of said element.

2. The regeneration method according to Claim 1, **characterised in that** air is used as a fluid.

3. The regeneration method according to Claim 1, **characterised in that** the exhaust gases of the engine are used as a fluid.

4. The regeneration method according to one of the preceding claims, **characterised in that** an additive is added to the fuel to lower the combustion temperature of the particles.

5. An installation for filtering exhaust gas of an internal combustion engine, notably of the Diesel type, with a filtration assembly (10) including at least one filtering zone (18, 20, 22) comprising a filtration cartridge (56, 58, 60) through which the exhaust gases of the engine flow, a catalytic combustion device (26) disposed upstream of said filtration assembly and making it possible to generate the hot gases that are necessary for the regeneration of at least one of said cartridges (56, 58, 60), said device including a pipe connected upstream of the filtration assembly (10) and bearing a catalytic element (36) as well as a fuel injection device (34), and an electric resistance (32) to raise the temperature of the fluid up to the priming temperature of said catalytic element, **characterised in that** it includes a heating pipe (90) around the catalytic element (36) such that the exhaust gases surround, and sweep over, the part of a pipe (30) in which the catalytic element (36) is located in order to raise the temperature of said element.

6. The filtering installation according to Claim 5, **characterised in that** the catalytic combustion device includes a pumping means (28) for the fluid intended to flow through the catalytic element (36).

7. The filtering installation according to one of claims 5 or 6, **characterised in that** it includes a distribution compartment (50, 52, 54) placed upstream of the cartridge (56, 58, 60) and bearing an engine exhaust gas inlet (44, 46, 48) and an intake (62, 64, 66) for hot gases coming from the catalytic combustion device (26).

8. The filtering installation according to Claim 7, **characterised in that** the distribution compartment (50, 52, 54) Includes a shutting-off means by a valve (74, 76, 78) In order to control the inlet of the engine exhaust gases and the intake of the hot gases.

9. The filtering installation according to one of claims 5 to 8, **characterised in that** the catalytic element includes a catalysing element (36) for the catalytic combustion and a catalytic oxidation element (36b) of the exhaust gases.

10. The filtering installation according to one of claims 5 to 9, **characterised in that** the catalytic element (36) is impregnated with a catalytic formulation making it possible to reduce the nitrogen oxides (NOx) in the exhaust gases.

## Patentansprüche

1. Verfahren zur Regeneration eines Partikelfilters (10), das in der Auspuffleitung (11) eines Verbrennungsmotors angeordnet ist, insbesondere des Typs Dieselmotor, wobei in diesem Verfahren der Verstopfungszustand des Filters bewertet wird, dieser Zustand mit einem Schwellenwert verglichen wird, dann, im Falle einer Überschreitung dieses Schwellenwerts, vor der Herstellung eines Gemischs aus einem Fluid und einem Kraftstoff die Temperatur des Fluids auf eine Aktivierungstemperatur eines Katalysatorelements (36) erhöht wird, das für eine katalytische Verbrennung verwendet wird, ein Kraftstoff eingespritzt wird, um dieses Gemisch herzustellen, vor diesem Filter eine katalytische Verbrennung dieser Mischung durchgeführt wird, sobald das Fluid diese Temperatur erreicht hat, um die Heißgase zu erzeugen, die zur Regeneration des Filters erforderlich sind, und eine Regeneration des Filters durch diese Heißgase durchgeführt wird, die das Filter durchlaufen und die eine ausreichende Temperatur aufweisen, um die Verbrennung der in diesem Filter zurückgehaltenen Partikel zu gewährleisten, **dadurch gekennzeichnet, dass** die Abgase um das Katalysatorelement (36) herum geführt werden, das zur katalytischen Verbrennung verwendet wird, um die Temperatur dieses Elements zu erhöhen.

2. Regenerationsverfahren nach Anspruch 1, **dadurch gekennzeichnet, dass** als Fluid Luft verwendet wird.

3. Regenerationsverfahren nach Anspruch 1, **dadurch gekennzeichnet, dass** als Fluid die Abgase des Motors verwendet werden.

4. Regenerationsverfahren nach einem der vorherigen Ansprüche, **dadurch gekennzeichnet, dass** dem Kraftstoff ein Additiv zugesetzt wird, um die Verbrennungstemperatur der Partikel zu senken.

5. Abgasfilteranlage eines Verbrennungsmotors, insbesondere des Typs Dieselmotor, mit einer Filtergruppe (10), umfassend mindestens eine Filterzone (18, 20, 22) mit einem Filtereinsatz (56, 58, 60), der von den Abgasen des Motors durchlaufen wird, eine katalytische Verbrennungsvorrichtung (26), die vor dieser Filtergruppe angeordnet ist und es erlaubt, Heißgase zu erzeugen, die für die Regeneration mindestens eines dieser Einsätze (56, 58, 60) erforderlich sind, wobei diese Vorrichtung eine Leitung umfasst, die vor der Filtergruppe (10) angeschlossen ist und die das Katalysatorelement (36) sowie eine Kraftstoffeinspritzvorrichtung (34) trägt, und einen elektrischen Widerstand (32), um die Temperatur des Fluids auf die Aktivierungstemperatur des Katalysatorelements zu erhöhen, **dadurch gekennzeichnet, dass** sie um das Katalysatorelement (36) herum eine Heizleitung (90) umfasst, wobei die Abgase den Abschnitt einer Leitung (30), in dem sich das Filterelement befindet, umgeben und diesen bestreichen, um die Temperatur dieses Elements zu erhöhen.

6. Filteranlage nach Anspruch 5, **dadurch gekennzeichnet, dass** die katalytische Verbrennungsvorrichtung ein Pumpmittel (28) für das Fluid umfasst, das für den Durchlauf des Katalysatorelements (36) vorgesehen ist.

7. Filteranlage nach einem der Ansprüche 5 oder 6, **dadurch gekennzeichnet, dass** sie einen Verteilungsraum (50, 52, 54) umfasst, der vor dem Einsatz (56, 58, 60) liegt und einen Einlass (44, 46, 48) für die Abgase des Motors und einen Einlauf (62, 64, 66) für die von der katalytischen Verbrennungsvorrichtung (26) kommenden Heißgase trägt.

8. Filteranlage nach Anspruch 7, **dadurch gekennzeichnet, dass** der Verteilungsraum (50, 52, 54) ein Ventil-Absperrmittel (74, 76, 78) umfasst, um den Einlass der Motorabgase und den Einlauf der Heißgase zu steuern.

9. Filteranlage nach einem der Ansprüche 5 bis 8, **dadurch gekennzeichnet, dass** das Katalysatorelement ein Katalysatorelement (36) für die katalytische Verbrennung und ein Katalysatorelement zur Oxidation (36b) der Abgase umfasst.

10. Filteranlage nach einem der Ansprüche 5 bis 9, **dadurch gekennzeichnet, dass** das Katalysatorelement (36) mit einer katalytischen Formulierung imprägniert ist, die es erlaubt, die Stickoxide (NOx) der Abgase zu reduzieren.
